# DEMANDE DE BREVET EUROPEEN

(11) **EP 4 385 623 A1**
(43) Date de publication de la demande: **19.06.2024**
(21) Numéro de dépôt: 23209960.6
(22) Date de dépôt: 15.11.2023
(51) Int. Cl.: B03C 3/47, B03C 3/53, B03C 3/60, B01L 3/00, G01N 1/40, G01N 1/22

(54) **MEMBRANE DE COLLECTE DE PARTICULES AÉROPORTÉES, À SURFACE FONCTIONNALISÉE**

(30) Priorité: 13.12.2022 FR 2213237
(71) Demandeur: Commissariat à l'énergie atomique et aux énergies alternatives, 75015 Paris (FR)
(72) Inventeur: BLAIRE, Guillaume, 38054 Grenoble cedex 09 (FR); ROUX, Jean-Maxime, 38054 Grenoble cedex 09 (FR)
(74) Mandataire: INNOV-GROUP

(57) **Abrégé**

L'invention concerne une membrane (M) de collecte de particules aéroportées réalisée sous la forme d'une bande de matière comportant au moins une couche de matériau hydrophile, ladite bande de matière étant subdivisée en plusieurs zones distinctes adjacentes avec au moins :
- Une zone de collecte (Z1) de particules dans laquelle les particules sont piégées lors de la collecte,
- Une zone de mouillage (Z2) par laquelle un liquide peut être introduit pour éluer les particules collectées au niveau de la zone de collecte,
- Une zone terminale (Z5) par laquelle le liquide est drainé pour emporter les particules collectées,
- La zone terminale (Z5) comportant au moins une première branche (B1) présentant une zone qui est fonctionnalisée par l'ajout d'au moins un réactif spécifique de cibles d'intérêt éventuellement présentes dans lesdites particules à collecter.

## Description

### Domaine technique de l'invention

La présente invention se rapporte à une membrane de collecte de particules aéroportées, ladite membrane étant dotée d'au moins une zone terminale dont la surface est fonctionnalisée.

### Etat de la technique

Plusieurs solutions ont déjà été proposées dans l'état de la technique pour collecter des particules présentes dans un aérosol, dans un but d'analyse de ces particules.

Une méthode de séparation connue et particulièrement avantageuse est de type électrostatique. Elle est mise en oeuvre dans des collecteurs électrostatiques, aussi appelés précipitateurs électrostatiques ou filtres électrostatiques (ESP pour *"electrostatic precipitator*" en anglais) ou encore appelés électrofiltres.
Il existe plusieurs catégories de collecteurs électrostatiques, parmi lesquelles :
- Les collecteurs électrostatiques dits secs, par exemple décrits dans la demande de brevet WO2015/197747A1,
- Les collecteurs électrostatiques dits humides, par exemple décrits dans la demande de brevet WO2004/041440A1,
- Les collecteurs électrostatiques dits semi-humides, par exemple décrits dans WO2007/012447A1.

Dans la demande de brevet EP4015087A1**,** il a été proposé d'utiliser une membrane de collecte hydrophile pour venir collecter les particules dans le collecteur. Par son caractère hydrophile, la membrane est capable de drainer un liquide par capillarité et évite ainsi le risque de dispersion du liquide si le dispositif est penché ou subit des secousses pendant son fonctionnement. La membrane se présente sous la forme d'une bande de matière souple. Elle est fabriquée dans un matériau fibreux ou alvéolé, pouvant drainer un liquide. Dans cette demande de brevet, la membrane est réalisée dans un matériau à base de cellulose (par exemple papier filtre ou équivalent), dans un matériau de type tissu à caractère hydrophile, de type mousse (éponge) ou de type fibre de verre. Cette membrane n'était cependant pas conçue pour jouer également le rôle d'électrode de collecte.

Lorsque le liquide est drainé par une membrane telle que celle décrite dans la demande de brevet EP4015087A1**,** celui-ci emporte les particules et se déverse par exemple dans un réservoir de collecte, dans lequel il peut être possible de réaliser des analyses par amplification biomoléculaire. Cependant, toutes les cibles d'intérêt ne peuvent pas forcément être détectées par une réaction telle qu'une amplification biomoléculaire et il peut s'avérer pertinent de pouvoir détecter d'autres cibles d'intérêt telles que les microorganismes, virus, bactéries, endospores, spores fongiques, telles que des molécules comme par exemple des oligonucléotides, des protéines, des mycotoxines, des organophosphorés...

Le but de l'invention est de proposer une solution permettant de détecter la présence de cibles d'intérêts dans les particules collectées, qui :
- Soit simple à mettre en oeuvre ;
- Qui puisse facilement être adaptée aux cibles d'intérêt à détecter ;
- Qui puisse être facilement remplacée, à chaque nouvelle collecte ;

### Exposé de l'invention

Ce but est atteint par une membrane de collecte de particules aéroportées réalisée sous la forme d'une bande de matière comportant au moins une couche de matériau hydrophile, ladite bande de matière étant subdivisée en plusieurs zones distinctes adjacentes avec au moins :
- Une zone de collecte de particules dans laquelle les particules sont piégées lors de la collecte,
- Une zone de mouillage par laquelle un liquide peut être introduit pour éluer les particules collectées au niveau de la zone de collecte,
- Une zone terminale par laquelle le liquide est drainé pour emporter les particules collectées,
- La zone terminale comportant au moins une première branche présentant une zone qui est fonctionnalisée par l'ajout d'au moins un réactif spécifique de cibles d'intérêt éventuellement présentes dans lesdites particules à collecter.

Selon une particularité, la première branche comporte plusieurs zones fonctionnalisées par des réactifs spécifiques de cibles d'intérêt distinctes éventuellement présentes dans les particules à collecter, lesdites zones étant dissociées les unes des autres.

Selon un exemple de réalisation, les zones fonctionnalisées sont positionnées de manière juxtaposée le long de la première branche.

Selon un autre exemple de réalisation, la première branche comporte plusieurs ramifications agencées en parallèle, sur chacune desquelles est réalisée au moins l'une desdites zones fonctionnalisées.

Selon une autre particularité, la zone terminale comporte une deuxième branche, agencée en parallèle de ladite première branche et comportant une extrémité libre. Selon une réalisation avantageuse, la membrane comporte :
- Une matrice formée d'un mélange d'un matériau polymère et d'une charge réalisée dans un matériau conducteur de l'électricité,
- Ladite matrice étant déposée sur ladite couche hydrophile de manière à former au moins une couche de matériau composite,
- Ladite zone de collecte étant obtenue par un traitement de surface de ladite couche hydrophile.

Selon une particularité, la couche hydrophile présente une surface totale et la zone de collecte est obtenue par ledit traitement de surface sur une première partie de sa surface totale et au moins une deuxième zone réalisée sur une deuxième partie de sa surface totale, la première couche ayant une première épaisseur sur sa zone de collecte et une deuxième épaisseur sur sa deuxième zone, ladite première épaisseur étant inférieure à la deuxième épaisseur.

Selon une autre particularité, la zone de mouillage est réalisée sans traitement de surface de ladite couche hydrophile.

Selon une autre particularité, la couche hydrophile est traitée pour former une zone de reprise de contact électrique de surface inférieure à sa surface totale, obtenue par ledit traitement de surface de ladite couche hydrophile sur une épaisseur égale à son épaisseur totale.

Selon une autre particularité, la membrane comporte une zone barrière hydrophobe réalisée entre la zone de reprise de contact et la zone de mouillage.

L'invention concerne également un collecteur électrostatique de particules aéroportées, comprenant un composant intégrant une unité de collecte et des moyens de collecte configurés pour forcer lesdites particules aéroportées vers ladite unité de collecte, caractérisé en ce que l'unité de collecte intègre une membrane de collecte telle que définie ci-dessus.

Selon une particularité, le composant comporte un circuit fluidique d'élution des particules aéroportées collectées par la membrane de collecte.

Selon une autre particularité, le collecteur comporte un réceptacle de collecte intégré au composant et positionné en sortie d'une deuxième branche de la zone terminale de la membrane de collecte, agencée en parallèle de ladite première branche.

### Brève description des figures

D'autres caractéristiques et avantages vont apparaître dans la description détaillée qui suit faite en regard des dessins annexés dans lesquels :
- La figure 1 illustre le principe de fonctionnement d'un collecteur électrostatique ;
- La figure 2 représente un procédé de fabrication d'une membrane de collecte selon une réalisation particulière de l'invention ;
- La figure 3 représente un mode de réalisation avantageux d'une membrane de collecte conforme à l'invention ;
- Les figures 4A à 4C montrent plusieurs alternatives de réalisation de la zone terminale de la membrane de collecte de l'invention ;

### Description détaillée d'au moins un mode de réalisation

L'invention vise une membrane M de collecte destinée à être employée dans un collecteur électrostatique 1 de particules P aéroportées.

Les particules P peuvent être des micro-particules ou des nano-particules présentes dans l'air sous forme d'aérosols.

De manière non limitative, la collecte des particules P peut notamment être réalisée dans l'air ambiant ou dans l'air expiré par un être vivant. Dans la suite de la description, on considérera que la collecte des particules est réalisée dans l'air ambiant.

L'un des objectifs est d'analyser les particules P en vue de détecter la présence d'un agent pathogène ou une trace de sa présence, par analyse des particules collectées.

Les agents pathogènes recherchés peuvent être, entre autres, des microorganismes tels que des virus, des bactéries, des spores fongiques, ou des toxines, comme des mycotoxines, des allergènes, ou encore tout autre agent biologique ou chimique nuisible. Les particules sont avantageusement collectées dans un but d'analyse. L'analyse peut consister à détecter la présence d'ADN, d'ARN, de protéines, d'éléments composants l'agent pathogène, tels que lipides ou glucides, d'un ou plusieurs agents pathogènes présents dans les particules collectées. L'analyse peut également consister à détecter des molécules telles que l'ATP ou encore des sucres tels que le mannitol, l'arabitol et le glucose qui renseignent sur la présence de microorganismes. L'analyse peut aussi porter sur la détection de molécules telles que des allergènes et des mycotoxines.

A titre d'exemple, la méthode d'analyse peut être de type amplification biomoléculaire (par exemple de type LAMP, RPA, PCR,...) ou de type immuno-enzymatique (par exemple type ELISA) ou de type immuno-chromatographique (par exemple LFA). On verra ci-après les différentes solutions qui permettent de réaliser les analyses de l'échantillon collecté.

Le collecteur qui embarque la membrane de l'invention pourra notamment être employé sous la forme d'une balise de surveillance. Pour cela, il devra alors présenter une certaine autonomie de fonctionnement, c'est-à-dire pouvoir collecter et analyser les particules, avec un minimum d'intervention extérieure et avantageusement sans manipulation entre la phase de collecte et la phase d'analyse.

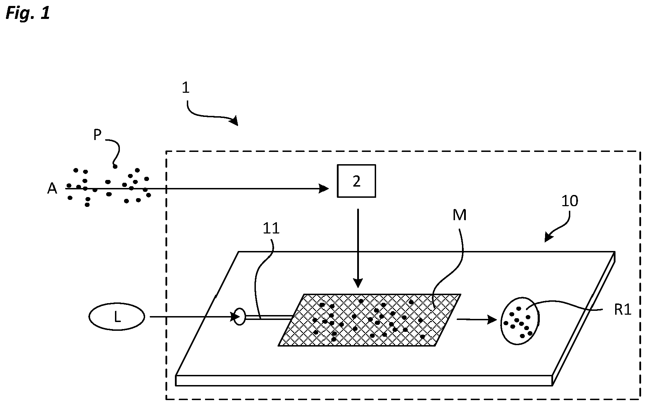

La figure 1 illustre le principe de fonctionnement d'un collecteur électrostatique 1 employant une membrane M de collecte telle que celle de l'invention.

Le collecteur 1 peut intégrer une unité de collecte de particules et une unité d'analyse des particules collectées. L'architecture décrite ci-dessous et représentée sur la figure 1 est à considérer de manière non limitative.

Le collecteur 1 comporte un composant 10 principal de collecte.

A titre d'exemple, le composant 10 de collecte peut être réalisé dans un matériau de type COP/COC (Cyclo Oléfin Polymère/Cyclo Olefin Copolymère), polycarbonate ou de type PMMA (Poly-méthacrylate de Méthyle). Il peut notamment présenter des caractéristiques de transparence, suffisantes pour une lecture optique lorsque l'analyse est mise en oeuvre directement dans l'unité d'analyse U2 du composant 10.

Le composant 10 fonctionne par effet électrostatique. Il comporte deux électrodes, une électrode de décharge et une contre-électrode dite de collecte, qui est en règle générale reliée à la masse. Les deux électrodes sont reliées chacune à une borne distincte d'une source d'alimentation électrique et sont éloignées l'une de l'autre de manière à créer un champ électrostatique suffisant pour attirer les particules aéroportées vers l'électrode de collecte, afin d'être captées et piégées au niveau de cette électrode de collecte. On verra ci-après que l'électrode de collecte peut être avantageusement formée par la membrane M de collecte de l'invention, celle-ci pouvant en effet embarquer des charges pour assurer ce rôle.

L'unité de collecte est arrangée sur une paroi dédiée du composant 10 et porte la membrane M de collecte de l'invention, en vue de collecter les particules P.

Le composant 10 peut notamment comporter une chambre dans laquelle est injecté ou aspiré un flux d'air contenant les particules. Des moyens de collecte 2, qui peuvent être générateurs du flux d'air, sont configurés pour diriger les particules présentes dans l'air vers la membrane M de collecte. Le composant 10 peut notamment comporter un canal interne de collecte à travers lequel circule l'air à analyser. La circulation de l'air à travers le canal peut être forcée (par exemple à l'aide d'un ventilateur) ou non. La membrane M de collecte est agencée pour venir tapisser au moins partiellement la surface interne du canal de collecte, de manière à ce que les particules présentes dans le flux d'air injecté dans le canal puissent être exposées au champ électrostatique créé.

Le composant 10 peut avantageusement intégrer un circuit fluidique, dit circuit fluidique d'élution. Ce circuit fluidique d'élution comporte avantageusement un premier canal fluidique 11 débouchant vers la membrane M de collecte, en vue de pouvoir déverser le liquide d'élution L sur la membrane.

Le circuit fluidique d'élution peut également comporter un réceptacle R1 pour réceptionner le liquide L d'élution drainé par la membrane M et transportant les particules P.

Le liquide L d'élution est par exemple une solution aqueuse telle que par exemple l'eau. Par capillarité, le liquide L assure le mouillage de toute la surface de la membrane M et entraine avec lui les particules précédemment collectées.

On verra ci-après que l'unité d'analyse peut être réalisée selon différentes configurations.

Selon l'invention, la membrane M de collecte est conçue pour assurer :
- Le rôle de support de collecte des particules aéroportées P et de piégeage des particules aéroportées ;
- Le rôle de support d'élution afin de faciliter la récupération des particules P collectées en vue de leur analyse sans risque de dispersion du liquide si le dispositif est penché ou s'il est secoué ou encore s'il vibre ;
- Eventuellement et avantageusement le rôle d'électrode de collecte ;

La membrane M est conçue avec des matériaux compatibles aux réactions d'analyse pouvant être mises en oeuvre et listées ci-dessus.

Par membrane, on entend une bande composée d'une ou plusieurs couches de matière présentant une épaisseur faible (quelques micromètres à quelques millimètres) au regard de sa longueur et de sa largeur.

La membrane comporte au moins une couche hydrophile 3.

De manière avantageuse, la membrane M se présente sous une forme composite, à partir de :
- La couche hydrophile 3 de collecte des particules ;
- Une matrice 40 réalisée à partir d'un mélange d'un matériau polymère et d'une charge 41 réalisée dans un matériau conducteur de l'électricité ;

Par caractère hydrophile, on entend que la couche hydrophile 3 est capable de drainer un liquide L, par exemple un liquide tel que l'eau, par capillarité. Pour rappel, on définit la mouillabilité d'un matériau en observant l'angle de contact (le plus souvent noté α) qu'a ce dernier avec une goutte d'eau :
- Lorsque cet angle (aussi appelé angle de contact, ou angle de raccordement) est inférieur à 90°, la surface est dite plus ou moins hydrophile (la surface de contact entre l'eau et le matériau est élevé) ;
- Lorsqu'il est supérieur à 90°, la surface est dite plus ou moins hydrophobe (la surface de contact entre l'eau et le matériau est faible) ;

Dans le cas de l'invention, par caractère hydrophile, on entend que la couche hydrophile présente avantageusement un angle de contact inférieur à 75° après une durée très courte inférieure à quelques secondes, par exemple de 5 secondes. Par ailleurs, dans la zone de collecte de la membrane, cet angle de contact décroît ensuite très rapidement jusqu'à être inférieur à 50°, l'eau pénétrant très rapidement dans le matériau. Elle présente donc un caractère très hydrophile.

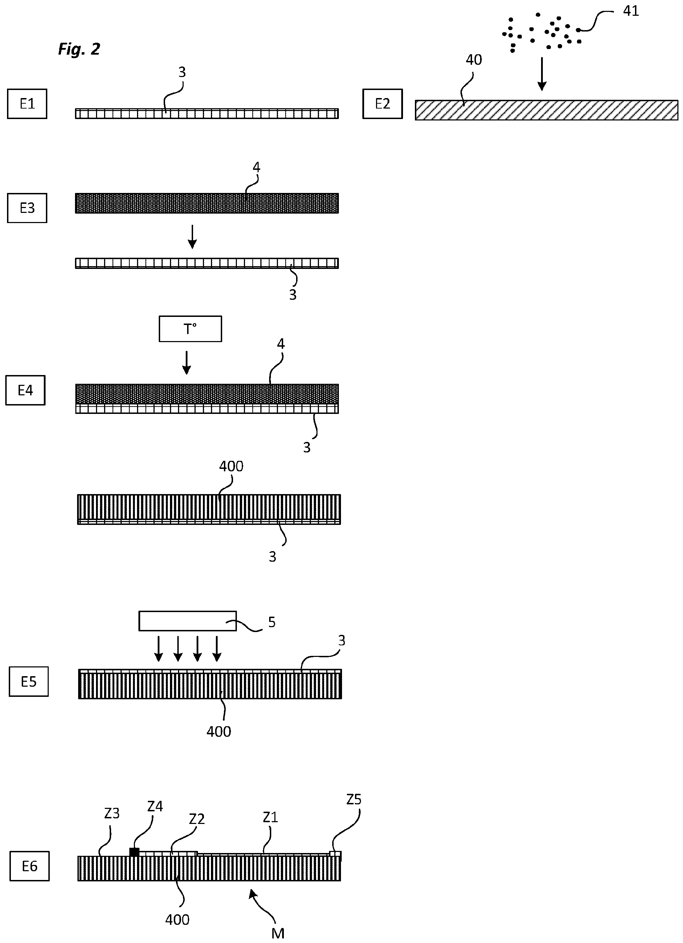

De manière non limitative, les différentes étapes de fabrication d'une membrane telle que celle de l'invention sont illustrées par la figure 2 et décrites ci-dessous.

Etape E1 : La couche hydrophile 3 est employée comme support de la matrice 40 dans le procédé de fabrication.

La couche hydrophile 3 comporte avantageusement des fibres entrelacées, lesdites fibres définissant entre elles des interstices par lesquels le liquide peut s'écouler lors de l'élution.

De manière avantageuse, la couche hydrophile 3 peut être fabriquée dans un matériau fibreux ou alvéolée, pouvant drainer un liquide tel que le liquide L d'élution. A titre d'exemple, elle peut être réalisée dans un matériau à base de cellulose (par exemple papier filtre ou équivalent), dans un matériau de type tissu à caractère hydrophile, de type mousse (éponge) ou de type fibre de verre.

A titre d'exemple, la couche hydrophile 3 est par exemple composée de papier type Whatman (marque déposée).

De façon à minimiser les volumes employés et ainsi augmenter la concentration en solution des particules collectées et éluées, l'épaisseur de la membrane est choisie de façon à retenir par capillarité un volume inférieur à 30 µl/cm².

Etape E2 : Une deuxième couche 4 est fabriquée à cette étape. Cette deuxième couche 4 est composée d'un mélange d'une matrice 40 réalisée en matériau polymère et d'une charge 41 réalisée dans un matériau conducteur de l'électricité. La charge 41 est ajoutée à la matrice afin de conférer à la membrane son caractère conducteur.

De manière non limitative, la matrice 40 peut être réalisée à base de silicone et la charge 41 peut être de la poudre de carbone. Le carbone et le silicone ainsi que le couple carbone/silicone présentent l'avantage d'être inertes vis-à-vis des réactions biochimiques. Le matériau composite formé n'est donc pas susceptible d'inhiber ces réactions. Bien entendu, d'autres matériaux présentant de telle propriétés vis-à-vis des réactions biochimiques pourraient être envisagées.

De manière avantageuse, le carbone sous forme graphite est ajouté à la matrice de silicone dans un pourcentage en masse compris entre 30% et 50%. La concentration en charge doit être choisie suffisante pour obtenir une bonne conductivité électrique, sans réduire la tenue mécanique du matériau obtenu et notamment le piégeage de la poudre incorporée par la matrice (par exemple à base de silicone).

Cette deuxième couche présente une forme liquide, pâteuse et visqueuse, facilitant sa mise en forme et son dépôt avant polymérisation.

Etape E3 : La deuxième couche 4 est déposée sur la couche hydrophile 3, par exemple formée de papier (voir ci-dessus). Il faut noter que la couche hydrophile 3 est avantageusement choisie avec une surface suffisamment rugueuse et/ou poreuse, afin de mieux accrocher le mélange.

Avantageusement, la deuxième couche 4 est déposée sur la première couche 3 à une épaisseur constante sur l'ensemble de la première couche 3.

Etape E4 : L'ensemble multicouches est ensuite mis en conditions pour polymérisation de la matrice (T°). Par exemple, dans le cas d'une membrane à base de silicone, l'ensemble multicouches peut être chauffé à 60°C pendant 3 heures.

Lors de la polymérisation, la deuxième couche 4 vient imprégner la couche hydrophile 3, formant le matériau composite 400. Comme on peut le voir sur la figure 2, une fine couche hydrophile 3 reste en surface.

Si l'épaisseur de la première couche hydrophile 3 restante est suffisamment faible, typiquement moins de 100µm, la membrane M peut être utilisée telle quelle dans un collecteur. La couche 3, qui est hydrophile, est placée dans le collecteur en contact avec l'air et sur la trajectoire du flux d'air, et donc sur la trajectoire des particules P à collecter. Les particules vont être attirées par la couche 4 conductrice polarisée et se déposer sur la couche hydrophile 3 de la membrane M sur laquelle elles seront capturées, éventuellement à l'intérieur de la première couche si celle-ci présente une porosité suffisante.

Si la couche hydrophile 3 possède une structure tridimensionnelle, comme par exemple du papier, le liquide L d'élution des particules P collectées va pénétrer l'intégralité de l'épaisseur de la couche hydrophile 3. Cette "capillarité en volume" est beaucoup plus efficace pour guider le liquide L dans tout le support. L'ensemble des particules P capturées est alors entrainé par le liquide L d'élution, augmentant le rendement d'élution. Le liquide portant les particules peut être récupéré dans un réceptacle dédié placé en aval.

Le liquide L d'élution est avantageusement l'eau. Il peut contenir avantageusement un tensio-actif tel que par exemple du TritonX100 et des protéines tel que par exemple la BSA ou la caséine pour augmenter le mouillage de la membrane, bloquer les interactions protéines/surface et accroitre le rendement de récupération des particules collectées.

Il se peut également que la couche 3 restante dispose d'une épaisseur trop élevée, venant ainsi limiter le rendement de collecte. Dans ce cas, de manière avantageuse, une étape de fabrication de la membrane M consiste à créer une ou plusieurs zones sur la membrane, par traitement de la couche hydrophile.

Etape E5 : Le traitement de surface peut consister en une gravure de la couche hydrophile 3 encore présente (moyens de gravure 5), par exemple par gravure laser, fraisage ou encore par création de zones à l'aide de barrières faites par exemple de paraffine. Les opérations de gravure peuvent être réalisées sur une épaisseur plus ou moins importante de l'épaisseur totale de la couche hydrophile, ceci afin de pouvoir définir une ou plusieurs zones.

Etape E6 : La membrane M est obtenue avec par exemple plusieurs zones distinctes, ayant chacune une fonction différente. Certaines zones peuvent être obtenues par un traitement de surface particulier appliqué à la couche hydrophile.

Le traitement de surface peut consister en une gravure de la couche hydrophile 3 encore présente, par exemple par gravure laser, fraisage ou encore par création de zones à l'aide de barrières faites par exemple de paraffine. Les opérations de gravure peuvent être réalisées sur une épaisseur plus ou moins importante de l'épaisseur totale de la couche hydrophile, ceci afin de pouvoir définir différentes zones sur la membrane, avec des fonctions différentes.

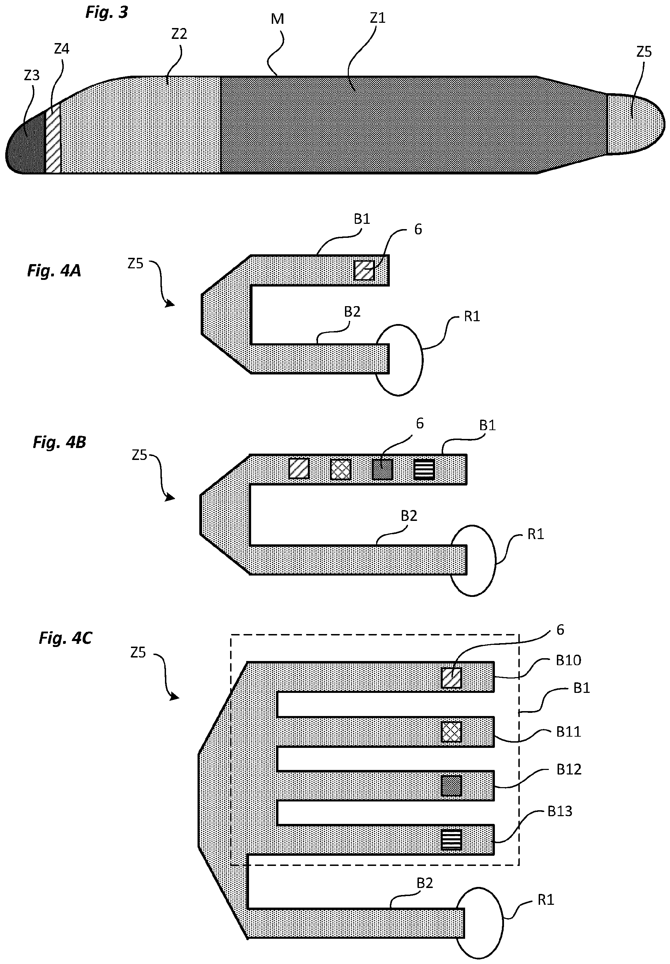

Ces différentes zones obtenues sont par exemple représentées sur la figure 3 :
- Une zone dite de collecte Z1 où la couche hydrophile 3 est avantageusement partiellement gravée ;
- Une zone dite de mouillage Z2 au niveau de laquelle la couche hydrophile 3 n'est pas gravée, ou gravée sur une épaisseur moindre que celle de la zone de collecte Z1 ;
- Une zone terminale Z5, par laquelle le liquide drainé quitte la membrane pour aller vers l'unité d'analyse U2. Sur cette zone Z5, la couche hydrophile 3 n'est avantageusement pas gravée.

De manière avantageuse, il est également possible de créer sur la membrane M :
- Une zone de reprise de contact Z3, dans laquelle la couche hydrophile 3 est retirée sur toute son épaisseur, de manière à créer un accès à la deuxième couche 4 située au-dessous ;
- Une ou plusieurs zones barrières Z4, agencées entre la zone de mouillage Z2 et la zone de reprise de contact Z3 pour guider le liquide d'élution L et empêcher celui-ci de migrer vers la zone de contact Z3 ;

Les différentes zones peuvent être réalisées sur une même membrane M et occuper toute ou partie de la surface totale de la membrane M. La zone de collecte Z1 peut notamment être plus ou moins étendue.

La zone de collecte Z1 est avantageusement obtenue par gravure sur une épaisseur de la couche hydrophile 3, inférieure à son épaisseur totale, en vue d'obtenir une zone ayant un compromis entre caractéristiques de mouillabilité et qualité de capture des particules P par forces électrostatiques.

La zone de mouillage Z2 est la zone par laquelle le liquide d'élution L est introduit pour la récupération des particules P collectées. Elle permet d'assurer la répartition du front d'élution sur toute la largeur de la membrane, évitant des chemins d'écoulement préférentiels, et un écoulement régulier du liquide d'élution L. Par capillarité, le liquide L introduit par la zone de mouillage Z2 assure le mouillage de toute la surface de la membrane M, au moins au niveau de sa zone de collecte Z1, et entraine avec lui les particules précédemment collectés. Le liquide L emporte les particules P et est avantageusement récupéré dans un réceptacle dédié.

La zone de reprise de contact Z3 peut également être employée comme zone de confinement du liquide d'élution L, la deuxième couche 4 étant hydrophobe.

Chaque zone barrière Z4 peut être formée par dépôt d'une couche de paraffine sur la surface de la membrane M. Une zone barrière est configurée pour faire barrière au liquide L entre deux zones distinctes de la membrane.

La zone terminale Z5 est destinée à :
∘ Ralentir l'écoulement fluidique en sortie de la zone Z1 de la membrane ;
∘ Forcer le liquide à s'écouler sans chemin préférentiel et sous forme de film ;
∘ Servir de zone de plaquage de la membrane dans son logement ;

En outre, selon l'invention, la zone terminale Z5 peut disposer d'une fonction d'analyse. Pour cela, la zone terminale Z5 peut comporter une première branche B1 dont au moins une zone est fonctionnalisée par l'ajout d'au moins un réactif spécifique de cibles d'intérêt qui sont éventuellement présentes dans les particules collectées. Par zone fonctionnalisée, on entend une surface et/ou un volume présent au niveau de ladite première branche avec un ou plusieurs réactifs déposés localement sur la membrane ou encore un matériau imprégné de réactif(s) mis au contact de la membrane.

Comme le liquide drainé par la membrane M est amené à transiter par la zone terminale Z5, sa fonctionnalisation présente un certain intérêt.

Avantageusement, la zone terminale Z5 est directement au contact de la zone de collecte Z1. Cependant, on pourrait doter la membrane d'une ou plusieurs zones intermédiaires entre la zone de collecte Z1 et la zone terminale Z5, l'objectif restant que le liquide drainé au niveau de la zone de collecte Z1 atteigne la zone terminale Z5.

Comme illustrée sur les figures annexées, de manière non limitative, la zone fonctionnalisée forme ainsi une pastille 6 à la surface de la première branche B1 de la zone terminale Z5.

Comme montré sur la figure 4A, il faut noter que cette première branche B1 peut avantageusement s'étendre en parallèle d'une deuxième branche B2 distincte de la première branche B1. Cette deuxième branche B2 présente avantageusement une extrémité libre qui débouche dans le réceptacle R1 destiné à recevoir le liquide L d'élution. Le réceptacle R1 est par exemple réalisé sous la forme d'une cavité creusée dans le composant 10. Le réceptacle R1 peut former une chambre de détection et par exemple embarquer des réactifs nécessaires à l'analyse, par exemple pour mettre en oeuvre une réaction d'amplification biomoléculaire. L'analyse peut en effet être réalisée par amplification biomoléculaire ou être de type immuno-enzymatique (type ELISA) ou encore de type immunochromatographique (type LFA).

La présence des deux branches B1, B2 permet avantageusement de réaliser différents types d'analyse en utilisant une seule membrane M de collecte.

La fonctionnalisation de la première branche B1 peut être réalisée en ajoutant une ou plusieurs pastilles contenant les réactifs spécifiques évoquées ci-dessus.

Dans le cas où la première branche B1 porte plusieurs pastilles 6 fonctionnalisées, celles-ci peuvent être agencées :
- En série de manière juxtaposées le long de la première branche B1 (figure 4B) ;
- En parallèle, la première branche comportant plusieurs ramifications, portant chacune une ou plusieurs pastilles fonctionnalisées (figure 4C) ;

Via la zone terminale Z5 et le principe de fonctionnalisation d'au moins une partie de sa surface et/ou de son volume, la détection des cibles d'intérêt peut se réaliser selon plusieurs modalités :

### - Immunochromatographique

La détection de cibles d'intérêts, directement sur la partie fonctionnalisée de la zone Z5 de la membrane, peut être effectuée au moyen d'une ou plusieurs réactions immunologiques. Dans ce cas, la pastille est fonctionnalisée avec des molécules spécifiques aptes à se lier aux cibles d'intérêt ; ces molécules spécifiques peuvent être des anticorps, des antigènes, des aptamères ou plus généralement des oligonucléotides.

### - Chimique

La détection de cibles d'intérêt peut également être effectuée au moyen d'une réaction chimique avec une molécule présente sous la forme d'une pastille fonctionnalisée de la zone terminale Z5, cette molécule provoquant une coloration, un changement de couleur, l'apparition ou la disparition de fluorescence, ou encore l'émission de lumière lorsqu'une espèce cible est présente dans l'échantillon collecté.

Par ailleurs, la présence de la deuxième branche de la zone terminale reste pertinente pour récolter le liquide d'élution dans le réceptacle en vue d'entreprendre une réaction de détection. La détection de molécules comme de l'ADN ou de l'ARN dans l'échantillon collecté et élué peut également être réalisé au moyen d'une réaction biomoléculaire (NAATs) par exemple : PCR, LAMP, LAMP QUASR, RPA, etc.

Il faut noter que pour toute détection de coloration, de changement de couleur, de fluorescence, le composant 10 devra disposer d'au moins une fenêtre transparente de visualisation.

L'invention permet ainsi d'obtenir un système monolithique reposant sur une seule membrane M de collecte composite pouvant assurer plusieurs fonctions telles que collecte des particules, élution et détection de cibles d'intérêt. La fonctionnalisation au niveau de sa zone terminale apporte un plus non négligeable par rapport à des membranes déjà connues.

## Revendications

1. Membrane (M) de collecte de particules aéroportées réalisée sous la forme d'une bande de matière comportant au moins une couche de matériau hydrophile, ladite bande de matière étant subdivisée en plusieurs zones distinctes adjacentes avec au moins :
- Une zone de collecte (Z1) de particules dans laquelle les particules sont piégées lors de la collecte,
- Une zone de mouillage (Z2) par laquelle un liquide (L) peut être introduit pour éluer les particules collectées au niveau de la zone de collecte,
- Une zone terminale (Z5) par laquelle le liquide est drainé pour emporter les particules collectées,
- **Caractérisée en ce que** la zone terminale (Z5) comporte au moins une première branche (B1) présentant une zone qui est fonctionnalisée par l'ajout d'au moins un réactif spécifique de cibles d'intérêt éventuellement présentes dans lesdites particules à collecter.

2. Membrane de collecte selon la revendication 1, **caractérisée en ce que** la première branche (B1) comporte plusieurs zones fonctionnalisées par des réactifs spécifiques de cibles d'intérêt distinctes éventuellement présentes dans les particules à collecter, lesdites zones étant dissociées les unes des autres.

3. Membrane de collecte selon la revendication 2, **caractérisée en ce que** les zones fonctionnalisées sont positionnées de manière juxtaposée le long de la première branche.

4. Membrane de collecte selon la revendication 2, **caractérisée en ce que** la première branche (B1) comporte plusieurs ramifications agencées en parallèle, sur chacune desquelles est réalisée au moins l'une desdites zones fonctionnalisées.

5. Membrane de collecte selon l'une des revendications 1 à 4, **caractérisé en ce que** la zone terminale comporte une deuxième branche (B2), agencée en parallèle de ladite première branche (B1) et comportant une extrémité libre.

6. Membrane de collecte selon l'une des revendications 1 à 5, **caractérisée en ce que** qu'elle comporte :
- Une matrice (40) formée d'un mélange d'un matériau polymère et d'une charge (41) réalisée dans un matériau conducteur de l'électricité,
- Ladite matrice étant déposée sur ladite couche hydrophile (3) de manière à former au moins une couche de matériau composite (400),
- Ladite zone de collecte étant obtenue par un traitement de surface de ladite couche (3) hydrophile.

7. Membrane selon l'une des revendications 6, **caractérisée en ce que** la couche hydrophile (3) présente une surface totale et **en ce que** la zone de collecte (Z1) est obtenue par ledit traitement de surface sur une première partie de sa surface totale et au moins une deuxième zone (Z2) réalisée sur une deuxième partie de sa surface totale, la première couche ayant une première épaisseur sur sa zone de collecte et une deuxième épaisseur sur sa deuxième zone, ladite première épaisseur étant inférieure à la deuxième épaisseur.

8. Membrane selon la revendication 7, **caractérisée en ce que** la zone de mouillage (Z2) est réalisée sans traitement de surface de ladite couche hydrophile (3).

9. Membrane selon la revendication 7 ou 8, **caractérisée en ce que** la couche hydrophile (3) est traitée pour former une zone de reprise de contact électrique (Z3) de surface inférieure à sa surface totale, obtenue par ledit traitement de surface de ladite couche hydrophile (3) sur une épaisseur égale à son épaisseur totale.

10. Membrane selon la revendication 9, **caractérisée en ce qu'**elle comporte une zone barrière hydrophobe (Z4) réalisée entre la zone de reprise de contact (Z3) et la zone de mouillage (Z2).

11. Collecteur électrostatique de particules aéroportées, comprenant un composant intégrant une unité de collecte et des moyens de collecte (2) configurés pour forcer lesdites particules aéroportées vers ladite unité de collecte, **caractérisé en ce que** l'unité de collecte intègre une membrane de collecte telle que celle définie dans l'une des revendications 1 à 10.

12. Collecteur électrostatique selon la revendication 11, **caractérisé en ce que** le composant comporte un circuit fluidique d'élution des particules aéroportées collectées par la membrane de collecte.

13. Collecteur électrostatique selon la revendication 11 ou 12, **caractérisé en ce qu'**il comporte un réceptacle de collecte (R1) intégré au composant et positionné en sortie d'une deuxième branche (B2) de la zone terminale de la membrane (M) de collecte, agencée en parallèle de ladite première branche (B1).
